(19) Europäisches Patentamt
European Patent Office
Office européen des brevets

(11) **EP 3 753 754 B1**

(12) **EUROPEAN PATENT SPECIFICATION**

(45) Date of publication and mention
of the grant of the patent:
**02.11.2022 Bulletin 2022/44**

(21) Application number: **20180175.0**

(22) Date of filing: **16.06.2020**

(51) International Patent Classification (IPC):
**B60C 11/24** $^{(2006.01)}$

(52) Cooperative Patent Classification (CPC):
**B60C 11/246; B60C 11/24**

(54) **METHOD AND SYSTEM FOR ESTIMATING THE WEAR OF A TYRE TREAD**

METHODE UND SYSTEM ZUR ABSCHÄTZUNG DES VERSCHLEISSES EINES
REIFEN-LAUFSTREIFENS

SYSTÈME ET PROCÉDÉ D'ESTIMATION DE L'ÉTAT D'USURE DE LA BANDE DE ROULEMENT
D'UN PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2019 IT 201900009555**

(43) Date of publication of application:
**23.12.2020 Bulletin 2020/52**

(73) Proprietor: **Bridgestone Europe NV/SA
1932 Zaventem (BE)**

(72) Inventor: **Lombardi, Roberto
00128 Roma (IT)**

(74) Representative: **Marchetti, Alessio
Bridgestone Technical Center Europe S.p.A.
Via Fosso del Salceto, 13/15
00128 Roma (IT)**

(56) References cited:
**EP-A1- 2 123 487      GB-A- 2 531 746
US-B1- 9 610 810**

**Description**

TECHNICAL SECTOR

The present invention relates to a method and to a system for estimating the wear of the tread of a pneumatic tyre.

PRIOR ART

As is known, when the tread of a pneumatic tyre wears, the performance of the same pneumatic tyre changes (degrades) considerably. Consequently, in order to improve the safety of a vehicle, it is of fundamental importance to be able to reliably detect the state of wear of a pneumatic tyre.
The known methods for detecting the state of wear of a pneumatic tyre involve the use of an estimation model based upon a plurality of parameters. In particular, such methods utilize information relating to the operating state of the vehicle whereupon said pneumatic tyre is mounted (such as, for example, the load or else the acceleration) and environmental information (such as, for example, the conditions of the road surface traversed and the atmospheric conditions).
These methods are not, however, easily implementable insofar as they involve a high computational burden.
The patent application GB2531746A describes a system for monitoring the depth of the tread of a pneumatic tyre. The system includes means for counting the rotating of the wheels, means for measuring the distance traveled, and means for calculating the circumference of the pneumatic tyre; the depth of the tread is then calculated as the difference between an estimated (calculated) value and an initial value of the circumference of the pneumatic tyre.
In the system of patent application GB2531746A the actual inflation pressure of the pneumatic tyre is not considered for the measurement of the tread wear; instead for the tread wear measurement a fully inflated tyre is assumed and hence any reduction of the tyre circumference for a certain distance after inflation to a predetermined nominal pressure is assumed to be due to wear only.

DESCRIPTION OF THE INVENTION

The aim of the present invention is to provide a method for estimating the wear of the tread of a pneumatic tyre that is both free from the disadvantages of the state of the art and that is, in particular, easy and inexpensive to implement.
A further aim of the present invention is to provide a system for estimating the wear of the tread of a pneumatic tyre that is both free from the disadvantages of the state of the art and that is, in particular, easy and inexpensive to implement.
According to the present invention a method and a system for estimating the wear of the tread of a pneumatic tyre are provided, according to that which is set forth in the attached claims.

BRIEF DESCRIPTION OF THE DRAWINGS

The present invention will now be described with reference to the attached drawings, which show an exemplary, non-limiting embodiment, wherein:

- Figure 1 schematically illustrates a first embodiment of a system that implements the method for estimating the wear of the tread of a pneumatic tyre, which is the object of the present invention;
- Figure 2 schematically illustrates a first variant of the system in Figure 1; and
- Figure 3 schematically illustrates a second variant of the system in Figure 1.

PREFERRED EMBODIMENTS OF THE INVENTION

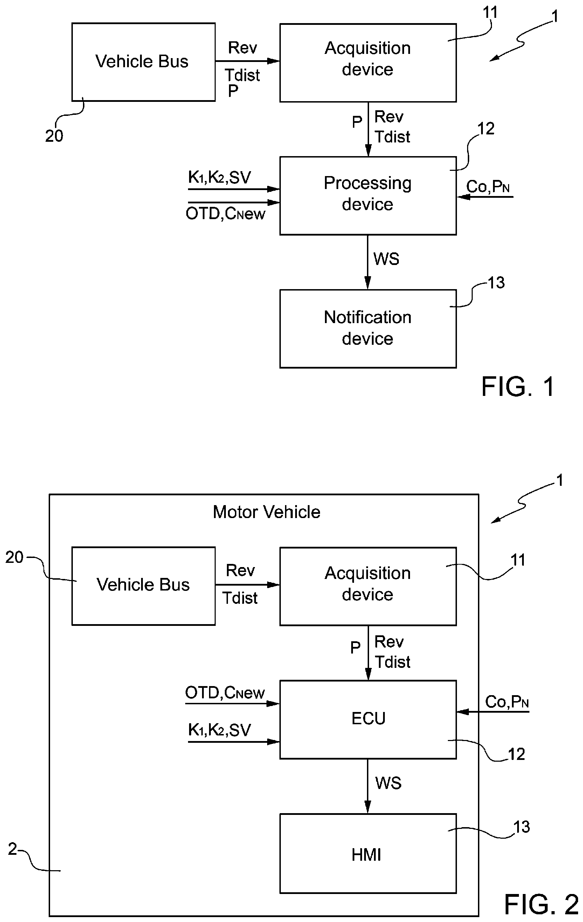

Based upon the results of performed tests, the applicant has designed and developed an innovative methodology, described in the discussion that follows, for estimating the wear of the tread of a pneumatic tyre.
In particular, as the tread wears down, the diameter, and consequently the circumference, of a pneumatic tyre is progressively reduced. Therefore, for the same distance to be traveled, a greater number of revolutions will be necessary for a worn pneumatic tyre as compared to a new pneumatic tyre.
The applicant has thereby experimentally verified that the difference in the number of revolutions in order to travel a certain distance during a test step, between a new pneumatic tyre and a worn pneumatic tyre, is proportional to the state of wear of the tread of the pneumatic tyre.
The innovative method for estimating the wear of the tread of a pneumatic tyre is performed by a system shown in Figure 1 comprising an acquisition device 11 that is installed on board a motor vehicle equipped with two or more wheels, each equipped with a pneumatic tyre, and that is coupled to a vehicle bus 20 (based, for example, upon a standard Controller Area Network (CAN) bus) of said motor vehicle. The system 1 also comprises a processing device 12 that is connected, in wired or wireless mode, to the acquisition device 11.

The acquisition device 11 is configured to acquire from the vehicle bus 20 signals that are indicative of the number of revolutions Rev of said two or more wheels. Furthermore, the acquisition device 11 is configured to supply at the output quantities that are indicative of the number of revolutions Rev of said two or more wheels.

The acquisition device 11 is also configured to acquire from the vehicle bus 20 signals linked to the driving of the motor vehicle. In particular, the acquisition device 11 is configured to acquire from the vehicle bus 20 information in relation to the position of the vehicle (by means of the GPS signal).

Finally, the acquisition device 11 is configured to acquire signals from the vehicle bus 20 in relation to the inflation pressure P of the pneumatic tyre (as measured by a system monitoring the pressure of the pneumatic tyres). Furthermore, the acquisition device 11 is configured to supply at the output quantities that are indicative of the inflation pressure P of the pneumatic tyre.

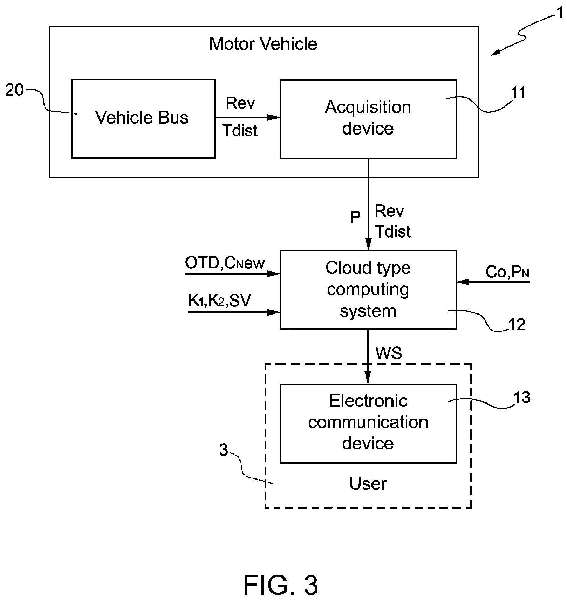

According to a first variant of the system shown in Figure 3, the processing device 12 is implemented by means of a cloud type computing system that is wirelessly remotely connected to the acquisition device 11 (for example, by means of one or more technologies for mobile communications, such as GSM, GPRS, UMTS).

In contrast, in a second variant of the system shown in Figure 2, the processing device 12 is implemented by means of an Electronic Control Unit - ECU (automotive use) 12 installed on board the motor vehicle 2. The electronic control unit may conveniently be a unit specifically dedicated to estimating the wear of the tread of pneumatic tyres, or else and preferably, it may be a unit dedicated to various tasks that also include estimating the wear of the tread of a pneumatic tyre.

The following example describes the method for calculating a quantity WS that is indicative of the state of wear of the tread of the pneumatic tyre. In particular, the quantity WS, which is indicative of the state of wear of the tread of the pneumatic tyre, is expressed using the following formula:

$$WS = \left[ \frac{1}{2\pi * OTD} \left( \frac{TD}{\mathrm{Re}v} - C_{NEW} \right) + 1 \right] * 100 \qquad [1]$$

wherein:

WS     quantity that is indicative of the state of wear of the tread of the pneumatic tyre;
OTD    thickness of the tread from new (when the tread is not worn);
TD     distance traveled by the pneumatic tyre during the test step;
Rev    actual number of revolutions of the pneumatic tyre that are required in order to travel the distance TD;
$C_{NEW}$  initial circumference of the tread, when the pneumatic tyre is not worn and under nominal inflation pressure conditions.

As is evident, the quantity WS is expressed as a percentage and represents the remaining thickness of the tread in relation to the thickness of the tread from new. The quantity WS is in fact determined in such a way that the higher the value of the quantity WS, the less the tread of the pneumatic tyre is consumed, and vice versa (the lower the value of the quantity WS, the more the tread of the pneumatic tyre is consumed). When the quantity WS is equal to 100%, this signifies that the pneumatic tyre is substantially new and that the tread is not worn, whilst, on the contrary, when the quantity WS is equal to 0%, this signifies that the pneumatic tyre is substantially smooth, with the tread being completely worn.

As already highlighted, the formula [1] is applicable in the case wherein the pneumatic tyre is under conditions of nominal inflation pressure.

In all other cases (with different inflation pressures than the nominal inflation pressure), however, the quantity WS, which is indicative of the state of wear of the tread of the pneumatic tyre, can be expressed using the following generic formula:

$$WS = \left[ \frac{1}{2\pi * OTD} \left( \frac{TD}{\mathrm{Re}v} - C \right) + 1 \right] * 100 \qquad [2]$$

wherein:

WS     quantity that is indicative of the state of wear of the tread of the pneumatic tyre;
OTD    thickness of the tread from new (when the tread is not worn);
TD     distance traveled by the pneumatic tyre during the test step;
Rev    actual number of revolutions of the pneumatic tyre that are required in order to travel the distance TD;
C      circumference of the tread from new (when the tread is not worn); variable as a function of the inflation pressure of pneumatic tyre.

The distance TD to be traveled during the test step of the pneumatic tyre is greater than 1 km. Preferably, the distance TD to be traveled during the test step of the pneumatic tyre is between 3 and 5 km. It was experimentally verified that a distance TD to be traveled during the test step of the pneumatic tyre of between 3 and 5 km makes it possible to significantly reduce the effects of the braking system and of the differences in driving conditions.

The applicant has also verified experimentally that the quantity WS, which is indicative of the state of wear of the tread of the pneumatic tyre, is influenced by several variables, including, in particular, the inflation pressure of the pneumatic tyre (when different than the nominal inflation pressure). Furthermore, the quantity WS, which is indicative of the state of wear of the tread of the pneumatic tyre, is influenced by the braking action and by the speed of the motor vehicle.

In particular, the inflation pressure of the pneumatic tyre affects the value of the circumference C of the tread.

The value of the circumference C of the tread from new, when the tread is not worn, is therefore calculated in such a way as to take into account the effects of the inflation pressure.

In particular, the value of the circumference C of the tread from new is calculated using the following formula:

$$C = C_0 + K * P \qquad [3]$$

wherein:

C     circumference of the tread from new, when the tread is not worn;
Co    circumference of the tread when the pneumatic tyre is deflated;
K     coefficient of correlation; and
P     relative inflation pressure (i.e., measured assuming as a reference the atmospheric pressure of the earth) of the pneumatic tyre (measured by means of a system for monitoring the pressure of pneumatic tyres).

In turn, the correlation coefficient K is calculated using the following formula:

$$K = (C_{NEW} - C_0) / P_N \qquad [4]$$

wherein:

$C_{NEW}$    circumference of the tread from new, when the pneumatic tyre is not worn and under nominal inflation pressure conditions.
Co    circumference of the tread when the pneumatic tyre is deflated;
K     coefficient of correlation; and
$P_N$    relative inflation pressure (i.e., measured assuming as a reference the atmospheric pressure of the earth) of the pneumatic tyre.

Furthermore, under certain conditions, the braking action of the vehicle can reduce the actual number of revolutions Rev of the pneumatic tyre that are necessary in order to travel the distance TD to be traveled during the test step of the pneumatic tyre; for example, in the case wherein pure rolling of the pneumatic tyre is absent during braking (but, rather, the pneumatic tyre is dragged during braking), the actual number of revolutions Rev of the pneumatic tyre is reduced.

In order to take into account any effects of the speed of the vehicle, according to a first variant, the test step, wherein the quantity WS, which is indicative of the state of wear of the tread of the pneumatic tyre, is only performed on straight sections wherein the braking system of the vehicle fitted with the pneumatic tyre is not operated (on motorways for example.)

According to a further variant, the quantity WS, which is indicative of the state of wear of the tread of the pneumatic tyre, is corrected by means of a factor $K_1$, which is indicative of the braking action of the vehicle during the test step.

Furthermore, the speed of the vehicle could reduce the actual number of revolutions Rev of the pneumatic tyre that are necessary in order to travel the distance TD during the test step of the pneumatic tyre.

In order to take into account any effects of the speed of the vehicle, according to a first variant, the test step wherein the quantity WS, which is indicative of the state of wear of the tread of the pneumatic tyre, is only performed when the speed of the vehicle is maintained below a limiting value (for example, in the case of a truck, the limiting value is equal to 70 km/h). The limiting value is determined during a preliminary step and is substantially variable as a function of the type of motor vehicle.

According to a further variant, the quantity WS, which is indicative of the state of wear of the tread of the pneumatic tyre, is corrected by means of a factor $K_2$, which is indicative of the braking action of the vehicle during the test step. Preferably, the factor $K_2$ is variable as a function of the ratio, or the difference, between the average speed of the vehicle over the distance TD traveled during the test step and the speed limiting value.

With regard to the quantities used in the formulas [1] to [4] given above, it appears evident that the initial thickness OTD of the tread (when the tread is not worn) and the initial circumference $C_{NEW}$ of the tread (when the tread is not worn and under conditions of nominal inflation pressure) are supplied by the manufacturer of the pneumatic tyre and stored within the processing device 12. Similarly, also the information regarding the circumference Co of the tread when the pneumatic tyre is deflated and the nominal inflation pressure $P_N$ of the pneumatic tyre are provided by the manufacturer of the pneumatic tyre and stored within the processing device 12.

The information relating to the distance traveled during the test step of the pneumatic tyre until the distance TD is reached is retrieved by means of the GPS signal of the vehicle.

Referring again to Figure 1, the system furthermore includes a notification device 13 that is configured to inform a user associated with said motor vehicle (for example, a driver and/or an owner of the same) of the detected wear, i.e., of the remaining thickness of the tread (expressed by means of the quantity WS). In particular, the notification device 13 is configured to inform a user in the case wherein the quantity WS is less than or equal to a safety value SV (equal, for example, to 60%).

According to the variant shown in Figure 3, the notification device 13 is implemented by means of an electronic communication device 13 (such as a smartphone, a tablet, a laptop, a desktop computer, a smart TV, a smartwatch, etc.) of the user 3 of the motor vehicle 2, and that is remotely connected to the cloud type computing system 12 by means of one or more wired and/or wireless networks.

In contrast, according to the variant illustrated in Figure 2, the notification device 13 is implemented by means of a Human-Machine Interface - HMI 13, which is provided on board the motor vehicle 2 and by means of which the ECU 12 can inform the driver of the motor vehicle by means of a graphical and/or audible warning produced by the HMI 13 (which, therefore, may conveniently comprise a screen and/or a graphical/acoustic signal).

From the foregoing, it is also important to highlight that the innovative method for estimating the wear of the tread of a pneumatic tyre, as described heretofore, makes it possible to simultaneously and independently calculate the quantity WS that is indicative of the state of wear of the tread of each pneumatic tyre that is fitted to the vehicle. In fact, the acquisition device 11 may be conveniently configured such as to acquire signals and, therefore, provide at the output quantities that are indicative of the number of revolutions Rev of each wheel of the motor vehicle; the processing device 12 may conveniently be programmed to calculate the quantity WS for each wheel of the motor vehicle; and the notification device 13 may be conveniently configured to signal to the user which pneumatic tyre is excessively worn.

**Claims**

**1.** - A method for estimating the wear of the tread of a pneumatic tyre that provides for calculating, during a test step, a quantity (WS) that is indicative of the percentaged ratio of the remaining thickness of the tread in relation to the thickness of the tread from new using the formula:

$$WS = \left[ \frac{1}{2\pi * OTD}\left( \frac{TD}{\mathrm{Re}\,v} - C \right) + 1 \right] * 100 \qquad [2]$$

wherein:

WS quantity that is indicative of the percentaged ratio of the state of wear of the tread of the pneumatic tyre;
OTD thickness of the tread from new (when the tread is not worn);
TD distance traveled by the pneumatic tyre during the test step;
Rev current number of revolutions of the pneumatic tyre that are required in order to travel said distance (TD);

$C_{NEW}$ circumference of the tread from new (when the tread is not worn); variable as a function of the inflation pressure (P) of pneumatic tyre;

wherein, when the inflation pressure (P) of the pneumatic tyre is different than the nominal inflation pressure ($P_N$), the circumference (C) of the tread from new is calculated using the formula:

$$C_{NEW} = C_0 + K * P \qquad [3]$$

wherein:

$C_{NEW}$ circumference of the tread from new (when the tread is not worn) when the inflation pressure (P) of the pneumatic tyre is different than the nominal inflation pressure ($P_N$);
$C_0$ circumference of the tread when the pneumatic tyre is deflated;
K coefficient of correlation; and
P relative inflation pressure of the pneumatic tyre;

wherein the coefficient of correlation (K) is calculated using the formula:

$$K = (C_{NEW} - C_0) / P_N \qquad [4]$$

wherein:

$C_{NEW}$ circumference of the tread from new (when the pneumatic tyre is not worn) and under nominal inflation pressure ($P_N$) conditions;
$C_0$ circumference of the tread when the pneumatic tyre is deflated;
K coefficient of correlation; and
$P_N$ relative nominal inflation pressure of the pneumatic tyre.

2. Method according to claim 1 wherein the distance (TD) to be traveled during the test step is greater than 1 km.

3. Method according to claim 1, wherein the distance (TD) to be traveled during the test step is between 3 and 5 km.

4. Method according to claim 1, 2 or 3, wherein the test step is only performed on straight sections wherein the braking system of the vehicle fitted with the pneumatic tyre is not operated.

5. Method according to any one of the preceding claims and comprising the further steps of:

determining a speed limiting value of the vehicle fitted with the pneumatic tyre; and
performing the test step only when the speed of the vehicle remains below the limiting value.

6. Method according to any one of the preceding claims and comprising the further step of correcting the quantity (WS), which is indicative of the state of wear of the tread of the pneumatic tyre, by means of a second factor ($K_2$) that is indicative of the speed of the of the vehicle fitted with the pneumatic tyre during the test step.

7. Method according to claim 6 and comprising the further steps of

determining a speed limiting value of the vehicle fitted with the pneumatic tyre; and
calculate the second factor ($K_2$) as a function of the ratio or the difference between the average speed of the vehicle over the distance (TD) traveled during the test step and said limiting value.

8. Method according to any one of the preceding claims and comprising the further step of informing a user in the case wherein the quantity (WS), which is indicative of the state of wear of the tread, is less than or equal to a safety value (SV).

9. System (1) for estimating the wear of the tread of a pneumatic tyre and comprising an acquisition device (11) and a processing device (12);

wherein the acquisition device (11) is:

- installable on board a motor vehicle (2) provided with two or more wheels fitted with pneumatic tyres;
- coupleable to a vehicle bus (20) of the motor vehicle; and
- configured to:

  - acquire, from the vehicle bus (20), signals that are indicative of the number of revolutions (Rev) of a wheel of said motor vehicle and information relating to the position of the vehicle;
  - acquire, from the vehicle bus (20), signals related to the inflation pressure (P) of the pneumatic tyre;
  - acquire, from the vehicle bus (20), information concerning a distance (TD) to be traveled by the pneumatic tyre during a test step, a thickness (OTD) of the tread from new, a circumference ($C_0$) of the tread when the pneumatic tyre is deflated, a circumference ($C_{NEW}$) of the tread from new and inflated under nominal inflation pressure ($P_N$), and the nominal inflation pressure ($P_N$) of the pneumatic tyre;
  - provide at the output quantities that are indicative of the number of revolutions (Rev) of the wheel of said motor vehicle and information relating to the position of the vehicle;
  - provide at the output quantities that are indicative of the inflation pressure (P) of the pneumatic tyre; and
  - provide at the output quantities that are indicative of the distance (TD) to be traveled by the pneumatic tyre during the test step, the thickness (OTD) of the tread from new, the circumference ($C_0$) of the tread when the pneumatic tyre is deflated, the circumference ($C_{NEW}$) of the tread from new and inflated under nominal inflation pressure ($P_N$), and the nominal inflation pressure ($P_N$) of the pneumatic tyre;

wherein the processing device (12) is:

- configured to receive, from the acquisition device (11), quantities that are indicative of the number of revolutions (Rev) of the wheel of said motor vehicle and information relating to the position of the vehicle, quantities that are indicative of the inflation pressure ($P_N$) of the pneumatic tyre, quantities that are indicative of the distance (TD) to be traveled by the pneumatic tyre during the test step, the circumference ($C_0$) of the tread when the pneumatic tyre is deflated, the circumference ($C_{NEW}$) of the tread from new and inflated under the nominal inflation pressure ($P_N$), and the nominal inflation pressure ($P_N$) of the pneumatic tyre; and
- programmed to

  - process the quantities relating to the number of revolutions (Rev) of the wheel of said motor vehicle and the information relating to the position of the vehicle; and
  - calculate, based upon the number of revolutions (Rev) of the wheel of said motor vehicle, the information relating to the position of the vehicle and the inflation pressure of the pneumatic tyre, the distance (TD) to be traveled by the pneumatic tyre during the test step, the thickness (OTD) of the tread from new, the circumference ($C_0$) of the tread when the pneumatic tyre is deflated, the circumference ($C_{NEW}$) of the tread from new and inflated under the nominal inflation pressure ($P_N$), and the nominal inflation pressure ($P_N$) of the pneumatic tyre, a quantity (WS) that is indicative of the percentaged ratio of the state of wear of the tread of the pneumatic tyre;

wherein the system (1) to implement the method according to the preceding claims in order to estimate the quantity (WS) that is indicative of the percentaged ratio of the state of wear of the tread of the pneumatic tyre.

**10.** System (1) according to claim 9, wherein the processing device (12) is a cloud-type computing system that is remotely wirelessly connected to the acquisition device (11) .

**11.** System (1) according to claim 9, wherein the processing device (12) is an electronic control unit installable on board the motor vehicle (2).

**Patentansprüche**

**1.** Verfahren zur Abschätzung des Verschleißes der Lauffläche eines Luftreifens, die die Berechnung, während eines Testschritts, einer Größe (WS) bereitstellt, die für das prozentuale Verhältnis der verbleibenden Dicke der Lauffläche in Bezug auf die Dicke der neuen Lauffläche unter Verwendung der folgenden Formel indikativ ist:

$$WS = \left[\frac{1}{2\pi * OTD}\left(\frac{TD}{Rev} - C\right) + 1\right] * 100 \qquad [2]$$

worin:

WS Größe, die für das prozentuale Verhältnis des Verschleißzustands der Lauffläche des Luftreifens indikativ ist;
OTD Dicke der neuen Lauffläche (wenn die Lauffläche nicht abgenutzt ist);
TD Entfernung, die vom Luftreifen während des Testschritts zurückgelegt wird;
Rev aktuelle Anzahl der Umdrehungen des Luftreifens, die erforderlich sind, um die Entfernung (TD) zurückzulegen;
$C_{NEU}$ Umfang der neuen Lauffläche (wenn die Lauffläche nicht abgenutzt ist); variabel in Abhängigkeit von dem Aufblasdruck (P) des Luftreifens;
wobei, wenn der Aufblasdruck (P) des Luftreifens sich von dem Nennaufblasdruck ($P_N$) unterscheidet, der Umfang (C) der neuen Lauffläche unter Verwendung der folgenden Formel berechnet wird:

$$C_{NEU} = C_0 + K * P \qquad [3]$$

worin:

$C_{NEU}$ Umfang der neuen Lauffläche (wenn die Lauffläche nicht abgenutzt ist), wenn der Aufblasdruck (P) des Luftreifens sich von dem Nennaufblasdruck ($P_N$) unterscheidet;
Co Umfang der Lauffläche, wenn der Luftreifen entleert ist;
K Korrelationskoeffizient und
P relativer Aufblasdruck des Luftreifens;

wobei der Korrelationskoeffizient (K) unter Verwendung der folgenden Formel berechnet wird:

$$K = (C_{NEU} - C_0) / P_N \qquad [4]$$

worin:

$C_{NEU}$ Umfang der neuen Lauffläche (wenn der Luftreifen nicht abgenutzt ist) und unter Bedingungen des Nennaufblasdrucks ($P_N$);
Co Umfang der Lauffläche, wenn der Luftreifen entleert ist;
K Korrelationskoeffizient und
$P_N$ relativer Nennaufblasdruck des Luftreifens.

2. Verfahren nach Anspruch 1, wobei die während des Testschritts zurückzulegende Entfernung (TD) größer als 1 km ist.

3. Verfahren nach Anspruch 1, wobei die während des Testschritts zurückzulegende Entfernung (TD) zwischen 3 und 5 km beträgt.

4. Verfahren nach Anspruch 1, 2 oder 3, wobei der Testschritt nur an geraden Abschnitten durchgeführt wird, wobei das Bremssystem des mit dem Luftreifen ausgestatteten Fahrzeugs nicht betätigt wird.

5. Verfahren nach einem der vorstehenden Ansprüche und umfassend die weiteren Schritte des:

Bestimmens eines Geschwindigkeitsbegrenzungswerts des Fahrzeugs, das mit dem Luftreifen ausgestattet ist; und
Durchführens des Testschritts nur dann, wenn die Geschwindigkeit des Fahrzeugs unter dem Grenzwert bleibt.

6. Verfahren nach einem der vorstehenden Ansprüche und umfassend den weiteren Schritt der Korrektur der Größe (WS), die für den Verschleißzustand der Lauffläche des Luftreifens indikativ ist, mittels eines zweiten Faktors ($K_2$), der für die Geschwindigkeit des mit dem Luftreifen ausgestatteten Fahrzeugs während des Testschritts indikativ ist.

7. Verfahren nach Anspruch 8 und umfassend die weiteren Schritte des

   Bestimmens eines Geschwindigkeitsbegrenzungswerts des Fahrzeugs, das mit dem Luftreifen ausgestattet ist; und
   Berechnens des zweiten Faktors ($K_2$) in Abhängigkeit von dem Verhältnis oder der Differenz zwischen der durchschnittlichen Geschwindigkeit des Fahrzeugs über die Entfernung (TD), die während des Testschritts zurückgelegt wird, und dem Grenzwert.

8. Verfahren nach einem der vorstehenden Ansprüche und umfassend den weiteren Schritt des Informierens eines Benutzers in dem Fall, dass die Größe (WS), die für den Verschleißzustand der Lauffläche indikativ ist, kleiner oder gleich einem Sicherheitswert (SV) ist.

9. System (1) zur Abschätzung des Verschleißes der Lauffläche eines Luftreifens und umfassend eine Erfassungsvorrichtung (11) und eine Verarbeitungsvorrichtung (12);
   wobei die Erfassungsvorrichtung (11):

   • an Bord eines Kraftfahrzeugs (2) installierbar ist, das mit zwei oder mehr Rädern ausgestattet ist, die mit Luftreifen versehen sind;
   • mit einem Fahrzeug-Bus (20) des Kraftfahrzeugs koppelbar ist und
   • konfiguriert ist zum:

      - Erfassen von Signalen, die für die Anzahl von Umdrehungen (Rev) eines Rads des Kraftfahrzeugs indikativ sind, und Informationen bezüglich der Position des Fahrzeugs von dem Fahrzeug-Bus (20);
      - Erfassen von Signalen, die sich auf den Aufblasdruck (P) des Luftreifens beziehen, von dem Fahrzeug-Bus (20);
      - Erfassen von Informationen bezüglich einer von dem Luftreifen während eines Testschritts zurückzulegenden Entfernung (TD), einer Dicke (OTD) der neuen Lauffläche, eines Umfangs ($C_0$) der Lauffläche, wenn der Luftreifen entleert ist, eines Umfangs ($C_{NEU}$) der neuen und unter Nennaufblasdruck ($P_N$) aufgeblasenen Lauffläche und des Nennaufblasdrucks ($P_N$) des Luftreifens von dem Fahrzeug-Bus (20);
      - Bereitstellen von Größen in der Ausgabe, die für die Anzahl der Umdrehungen (Rev) des Rads des Kraftfahrzeugs indikativ sind, und Informationen bezüglich der Position des Fahrzeugs;
      - Bereitstellen von Größen in der Ausgabe, die für den Aufblasdruck (P) des Luftreifens indikativ sind; und
      - Bereitstellen von Größen in der Ausgabe, die für die von dem Luftreifen während des Testschritts zurückzulegende Entfernung (TD), die Dicke (OTD) der neuen Lauffläche, den Umfang ($C_0$) der Lauffläche, wenn der Luftreifen entleert ist, den Umfang ($C_{NEU}$) der neuen, unter Nennaufblasdruck ($P_N$) aufgeblasenen Lauffläche und den Nennaufblasdruck ($P_N$) des Luftreifens indikativ sind;

   wobei die Verarbeitungsvorrichtung (12):

   • konfiguriert ist zum Empfangen, von der Erfassungsvorrichtung (11), von Größen, die für die Anzahl der Umdrehungen (Rev) des Rads des Kraftfahrzeugs indikativ sind, und Informationen bezüglich der Position des Fahrzeugs, Größen, die für den Aufblasdruck ($P_N$) des Luftreifens indikativ sind, Größen, die für die von dem Luftreifen während des Testschritts zurückzulegende Entfernung (TD), den Umfang ($C_0$) der Lauffläche, wenn der Luftreifen entleert ist, den Umfang ($C_{NEU}$) der neuen und unter Nennaufblasdruck ($P_N$) aufgeblasenen Lauffläche und den Nennaufblasdruck ($P_N$) des Luftreifens indikativ sind; und
   • programmiert ist zum

      - Verarbeiten der Größen bezüglich der Anzahl der Umdrehungen (Rev) des Rads des Kraftfahrzeugs und der Informationen bezüglich der Position des Fahrzeugs und
      - Berechnen, basierend auf der Anzahl der Umdrehungen (Rev) des Rads des Kraftfahrzeugs, der Informationen bezüglich der Position des Fahrzeugs und des Aufblasdrucks des Luftreifens, der von dem Luftreifen während des Testschritts zurückzulegenden Entfernung (TD), der Dicke (OTD) der neuen Lauffläche, des Umfangs ($C_0$) der Lauffläche, wenn der Luftreifen entleert ist, des Umfangs ($C_{NEU}$) der neuen und unter Nennaufblasdruck ($P_N$) aufgeblasenen Lauffläche und des Nennaufblasdrucks ($P_N$) des Luftreifens, einer Größe (WS), die für das prozentuale Verhältnis des Verschleißzustands der Lauffläche des Luftreifens indikativ ist;

   wobei das System (1) zum Implementieren des Verfahrens nach den vorstehenden Ansprüchen, um die Größe (WS) abzuschätzen, die für das prozentuale Verhältnis des Verschleißzustands der Lauffläche des Luftreifens indikativ ist.

10. System (1) nach Anspruch 9, wobei die Verarbeitungsvorrichtung (12) ein Rechensystem des Cloud-Typs ist, das drahtlos mit der Erfassungsvorrichtung (11) fernverbunden ist.

11. System (1) nach Anspruch 9, wobei die Verarbeitungsvorrichtung (12) eine elektronische Steuereinheit ist, die an Bord des Kraftfahrzeugs (2) installierbar ist.

**Revendications**

1. Procédé d'estimation de l'usure de la bande de roulement d'un pneumatique qui permet de calculer, lors d'une étape de test, une quantité (WS) qui est indicative du rapport en pourcentage de l'épaisseur restante de la bande de roulement par rapport à l'épaisseur de la bande de roulement neuve en utilisant la formule :

$$WS = \left[ \frac{1}{2\pi * OTD} / \left( \frac{TD}{Rev} - C \right) + 1 \right] * 100 \qquad [2]$$

dans lequel :

WS quantité qui est indicative du rapport en pourcentage de l'état d'usure de la bande de roulement du pneumatique ;
OTD épaisseur de la bande de roulement neuve (lorsque la bande de roulement n'est pas usée) ;
TD distance parcourue par le pneumatique lors de l'étape de test ;
Rev nombre actuel de tours du pneumatique qui sont requis afin de parcourir ladite distance (TD) ;
$C_{NEW}$ circonférence de la bande de roulement neuve (lorsque la bande de roulement n'est pas usée) ; variable en fonction de la pression de gonflage (P) de pneumatique ;
dans lequel, lorsque la pression de gonflage (P) du pneumatique est différente de la pression de gonflage nominale ($P_N$), la circonférence (C) de la bande de roulement neuve est calculée en utilisant la formule :

$$C_{NEW} = C_0 + K * P \quad [3]$$

dans lequel :

$C_{NEW}$ circonférence de la bande de roulement neuve (lorsque la bande de roulement n'est pas usée) lorsque la pression de gonflage (P) du pneumatique est différente de la pression de gonflage nominale ($P_N$) ;
Co circonférence de la bande de roulement lorsque le pneumatique est dégonflé ;
K coefficient de corrélation ; et
P pression de gonflage relative du pneumatique ;
dans lequel le coefficient de corrélation (K) est calculé en utilisant la formule :

$$K = (C_{NEW} - C_0) / P_N \qquad [4]$$

dans lequel :

$C_{NEW}$ circonférence de la bande de roulement neuve (lorsque le pneumatique n'est pas usé) et sous des conditions de pression de gonflage nominale ($P_N$) ;
Co circonférence de la bande de roulement lorsque le pneumatique est dégonflé ;
K coefficient de corrélation ; et
$P_N$ pression de gonflage nominale relative du pneumatique.

2. Procédé selon la revendication 1 dans lequel la distance (TD) à être parcourue lors de l'étape de test est supérieure à 1 km.

**3.** Procédé selon la revendication 1, dans lequel la distance (TD) à être parcourue lors de l'étape de test est comprise entre 3 et 5 km.

**4.** Procédé selon la revendication 1, 2 ou 3, dans lequel l'étape de test est réalisée uniquement sur des sections droites dans lequel le système de freinage du véhicule équipé du pneumatique n'est pas actionné.

**5.** Procédé selon l'une quelconque des revendications précédentes et comprenant les étapes supplémentaires consistant à :

déterminer une valeur limite de vitesse du véhicule équipé du pneumatique ; et
réaliser l'étape de test uniquement lorsque la vitesse du véhicule reste en dessous de la valeur limite.

**6.** Procédé selon l'une quelconque des revendications précédentes et comprenant l'étape supplémentaire consistant à corriger la quantité (WS), qui est indicative de l'état d'usure de la bande de roulement du pneumatique, au moyen d'un second facteur ($K_2$) qui est indicatif de la vitesse du du véhicule équipé du pneumatique lors de l'étape de test.

**7.** Procédé selon la revendication 8 et comprenant les étapes supplémentaires consistant à

déterminer une valeur limite de vitesse du véhicule équipé du pneumatique ; et
calculer le second facteur ($K_2$) en fonction du rapport ou de la différence entre la vitesse moyenne du véhicule sur la distance (TD) parcourue lors de l'étape de test et ladite valeur limite.

**8.** Procédé selon l'une quelconque des revendications précédentes et comprenant l'étape supplémentaire consistant à informer un utilisateur dans le cas dans lequel la quantité (WS), qui est indicative de l'état d'usure de la bande de roulement, est inférieure à ou égale à une valeur de sécurité (SV).

**9.** Système (1) d'estimation de l'usure de la bande de roulement d'un pneumatique et comprenant un dispositif d'acquisition (11) et un dispositif de traitement (12) ;
dans lequel le dispositif d'acquisition (11) est :

• installable à bord d'un véhicule à moteur (2) pourvu de deux ou plusieurs roues équipées de pneumatiques ;
• couplable à un bus de véhicule (20) du véhicule à moteur ; et
• configuré pour :

- acquérir, depuis le bus de véhicule (20), des signaux qui sont indicatifs du nombre de tours (Rev) d'une roue dudit véhicule à moteur et des informations s'apparentant à la position du véhicule ;
- acquérir, depuis le bus de véhicule (20), des signaux apparentés à la pression de gonflage (P) du pneumatique ;
- acquérir, depuis le bus de véhicule (20), des informations concernant une distance (TD) à être parcourue par le pneumatique lors d'une étape de test, une épaisseur (OTD) de la bande de roulement neuve, une circonférence ($C_0$) de la bande de roulement lorsque le pneumatique est dégonflé, une circonférence ($C_{NEW}$) de la bande de roulement neuve et gonflée sous pression de gonflage nominale ($P_N$), et la pression de gonflage nominale ($P_N$) du pneumatique ;
- fournir au niveau de la sortie des quantités qui sont indicatives du nombre de tours (Rev) de la roue dudit véhicule à moteur et des informations s'apparentant à la position du véhicule ;
- fournir au niveau de la sortie des quantités qui sont indicatives de la pression de gonflage (P) du pneumatique ; et
- fournir au niveau de la sortie des quantités qui sont indicatives de la distance (TD) à être parcourue par le pneumatique lors de l'étape de test, l'épaisseur (OTD) de la bande de roulement neuve, la circonférence ($C_0$) de la bande de roulement lorsque le pneumatique est dégonflé, la circonférence ($C_{NEW}$) de la bande de roulement neuve et gonflée sous pression de gonflage nominale ($P_N$), et la pression de gonflage nominale ($P_N$) du pneumatique ;

dans lequel le dispositif de traitement (12) est :

• configuré pour recevoir, depuis le dispositif d'acquisition (11), des quantités qui sont indicatives du nombre de tours (Rev) de la roue dudit véhicule à moteur et des informations s'apparentant à la position du véhicule, des quantités qui sont indicatives de la pression de gonflage ($P_N$) du pneumatique, des quantités qui sont indicatives de la distance (TD) à être parcourue par le pneumatique lors de l'étape de test, la circonférence ($C_0$) de la bande de roulement lorsque le pneumatique est dégonflé, la circonférence ($C_{NEW}$) de la bande de roulement neuve et gonflée sous la pression de gonflage nominale ($P_N$), et la pression de gonflage nominale ($P_N$) du pneumatique ; et

• programmé pour

- traiter les quantités s'apparentant au nombre de tours (Rev) de la roue dudit véhicule à moteur et les informations s'apparentant à la position du véhicule ; et
- calculer, en fonction du nombre de tours (Rev) de la roue dudit véhicule à moteur, des informations s'apparentant à la position du véhicule et à la pression de gonflage du pneumatique, de la distance (TD) à être parcourue par le pneumatique lors de l'étape de test, de l'épaisseur (OTD) de la bande de roulement neuve, de la circonférence ($C_0$) de la bande de roulement lorsque le pneumatique est dégonflé, de la circonférence ($C_{NEW}$) de la bande de roulement neuve et gonflée sous la pression de gonflage nominale ($P_N$), et de la pression de gonflage nominale ($P_N$) du pneumatique, une quantité (WS) qui est indicative du rapport en pourcentage de l'état d'usure de la bande de roulement du pneumatique ;

dans lequel le système (1) pour mettre en œuvre le procédé selon les revendications précédentes afin d'estimer la quantité (WS) qui est indicative du rapport en pourcentage de l'état d'usure de la bande de roulement du pneumatique.

10. Système (1) selon la revendication 9, dans lequel le dispositif de traitement (12) est un système informatique de type cloud qui est connecté sans fil à distance au dispositif d'acquisition (11).

11. Système (1) selon la revendication 9, dans lequel le dispositif de traitement (12) est une unité de commande électronique installable à bord du véhicule à moteur (2).

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2531746 A